**Europäisches Patentamt**

**European Patent Office**

**Office européen des brevets**

(19)

(11) Veröffentlichungsnummer : **0 357 584 B1**

# (12) EUROPÄISCHE PATENTSCHRIFT

(45) Veröffentlichungstag der Patentschrift :
**15.04.92 Patentblatt 92/16**

(21) Anmeldenummer : **89890165.7**

(22) Anmeldetag : **15.06.89**

(51) Int. Cl.⁵ : **B60K 17/28**

⑤ㄴ Zapfwellengetriebe,insbesondere für die Frontzapfwelle von Ackerschleppern od. dgl.

(30) Priorität : **16.06.88 AT 1563/88**

(43) Veröffentlichungstag der Anmeldung :
**07.03.90 Patentblatt 90/10**

(45) Bekanntmachung des Hinweises auf die
Patenterteilung :
**15.04.92 Patentblatt 92/16**

(84) Benannte Vertragsstaaten :
**CH DE FR GB IT LI**

(56) Entgegenhaltungen :
**DE-C- 937 868**
**DE-C- 1 058 377**
**GB-A- 582 860**
**US-A- 2 636 390**

(73) Patentinhaber : **STEYR-DAIMLER-PUCH**
**AKTIENGESELLSCHAFT**
**Franz-Josefs-Kai 51**
**A-1010 Wien (AT)**

(72) Erfinder : **Weigl, Franz**
**Beethovenstrasse 9**
**A-4300 St. Valentin (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 357 584 B1

Jouve, 18, rue Saint-Denis, 75001 PARIS

## Beschreibung

Die Erfindung bezieht sich auf ein Zapfwellengetriebe, insbesondere für die Frontzapfwelle von Ackerschleppern od.dgl., mit einer an den Antriebsmotor ankuppelbaren Eingangswelle, einer den Zapfwellenstummel bildenden Ausgangswelle und drehfest auf den Ein- und Ausgangswellen angeordneten An- und Abtriebsrädern.

Bisher werden Front- und Heckzapfwellen meist gleichsinnig, nämlich in Fahrtrichtung rechtsdrehend angetrieben, was zwar mit geringstem technischem Aufwand durchführbar ist, aber bei wechselweisem heck- oder frontseitigem Einsatz von Anbaugeräten mit der dabei auftretenden Änderung der Antriebsrichtung ein Umkehrgetriebe verlangt. Zur Vermeidung dieser Umkehrgetriebe gehen nun Nominierungsbestrebungen dahin, Antriebsrichtung und Drehzahl der Frontzapfwellen zu vereinheitlichen und neben einer in Fahrtrichtung mit 540 U/min oder 1000 U/min rechtsdrehenden Heckzapfwelle (gültige DIN-Norm) eine in Fahrtrichtung mit 1000 U/min linksdrehende Frontzapfwelle (vorgeschlagene DIN-Norm) vorzusehen, sodaß zumindest in der Übergangszeit, bis die Vereinheitlichung erreicht ist, die Zapfwellengetriebe aus wirtschaftlichen Gründen verschiedene Anforderungen erfüllen und je nach Bedarf rechts- oder linksdrehende Zapfwellenstummel mit ein oder zwei Drehzahlstufen bieten sollten. Um dies zu erreichen, ist es bisher notwendig, Zapfwellengetriebe mit zwei gegensinnig drehenden Zapfwellenstummeln zu bauen, wobei auch die Drehzahlen der beiden Stummel unterschiedlich sein können, ein Umschalten aber zur Änderung der Drehzahlen nicht möglich ist, da der Einbau einer Schalteinrichtung zu aufwendig und platzraubend wäre. Hiezu kommt noch, daß bei den bekannten Zapfwellenantrieben für eine vollständige mechanische Trennung des Antriebsstranges eine außerhalb des Zapfwellengetriebes angeordnete zusätzliche Schiebemuffe od. dgl. vorgesehen sein muß. Diese mechanische Trennung ist deshalb erwünscht, weil das Zapfwellengetriebe vorwiegend über eine Lamellenkupplung mit dem Antriebsmotor in Verbindung steht und über diese Lamellenkupplungen auch im ausgekuppelten Zustand noch ein gewisses Restmoment übertragen wird, das beispielsweise ein Starten mit angekuppeltem Gerät vor allem in kalter Jahreszeit be- oder gar verhindert.

Der Erfindung liegt daher die Aufgabe zugrunde, diese Mängel zu beseitigen und ein Zapfwellengetriebe der eingangs geschilderten Art zu schaffen, das den Antrieb eines Zapfwellenstummels mit unterschiedlichem Drehsinn und/oder unterschiedlicher Drehzahl sowie eine vollständige mechanische Trennung vom Antriebsmotor erlaubt und das sich darüber hinaus durch seinen verhältnismäßig geringen Bau- und Konstruktionsaufwand und vor allem auch durch seine geringe Baulänge auszeichnet.

Die Erfindung löst diese Aufgabe dadurch, daß die Eingangswelle ein Schieberad als Antriebsrad aufnimmt, daß die Ausgangswelle zweinebeneinander sitzende Abtriebsräder trägt, daß ein auf einer Zwischenwelle lose gelagertes Doppelrad mit einem der Abtriebsräder kämmt und daß das Schieberad über eine Schalteinrichtung aus einer Freistellung in zwei Schaltstellungen verschiebbar ist, in deren einer es in das freie Abtriebsrad und in deren anderer es in das freie Rad des Doppelrades eingreift. Durch ein einfaches Verschieben des Schieberades läßt sich der Zapfwellenstummel rechtslaufend oder linkslaufend antreiben oder in der Freistellung vollständig mechanisch von der Eingangswelle trennen. Je nach Ausstattung und Wahl der Zahnradgrößen ist dabei die gewünschte Drehzahl des Zapfwellenstummels für beide Drehrichtungen frei vorwählbar. Da das Schieberad auf der Eingangswelle sitzt, können die beiden Abtriebsräder auf der Ausgangswelle unmittelbar nebeneinander angeordnet sein, so daß trotz der Schaltmöglichkeit der Abstand von der Getriebeflanschfläche bis zum Stummelende minimal bleibt und sich die für die gewünschte enge Anbaulage des Anbaugerätes erforderliche kurze Baulänge ergibt, welche enge Anbaulage eine günstigere Vorderachsbelastung, eine bessere Übersichtlichkeit und einen geringeren Geräteüberstand mit sich bringt. Das Freistellen des Schieberades erübrigt den Einbau einer zusätzlichen mechanischen Trennkupplung und trotz der Schaltbarkeit und den verschiedensten Ausführungsvarianten des Getriebes bietet sich die Möglichkeit einer sehr wirtschaftlichen Fertigung, da für alle wählbaren Varianten viele Gleichteile, wie Gehäuse, Gehäusedeckel, Eingangswelle, Ausgangswelle, Zwischenwelle, Schalteinrichtung u.dgl. vorhanden sind und nur jeweils das Schieberad, die beiden Abtriebsräder und das Doppelrad auf die einzelnen Varianten speziell abgestimmt sein müssen.

Besonders vorteilhaft ist es auch, wenn erfindungsgemäß das Doppelrad mit dem vom Zapfwellenstummel entfernteren Abtriebsrad kämmt und das dem Stummel benachbarte andere Abtriebsrad übergreift, wobei vorzugsweise das Schieberad in seiner Freistellung zwischen dem ihm zugeordneten Rad des Doppelrades und dem ihm zugeordneten Abtriebsrad liegt, da sich so das Doppelrad vom hinteren Abtriebsrad zum Zapfwellenstummel hin nach vorne erstreckt und das Getriebe dadurch besonders kurz baut.

Ist nach einer zweckmäßigen Ausgestaltung der Erfindung auf dem Doppelrad ein weiteres Losrad gelagert, das mit dem dem Schieberad zugeordneten Abtriebsrad kämmt und in das statt in das Antriebsrad auch das Schieberad in seiner einen Schaltstellung eingreift, kann der Zapfwellenstummel linksdrehend in zwei Drehzahlstufen angetrieben werden, was bisher ebenfalls nicht möglich war.

In der Zeichnung ist der Erfindungsgegenstand schematisch veranschaulicht, und zwar zeigen

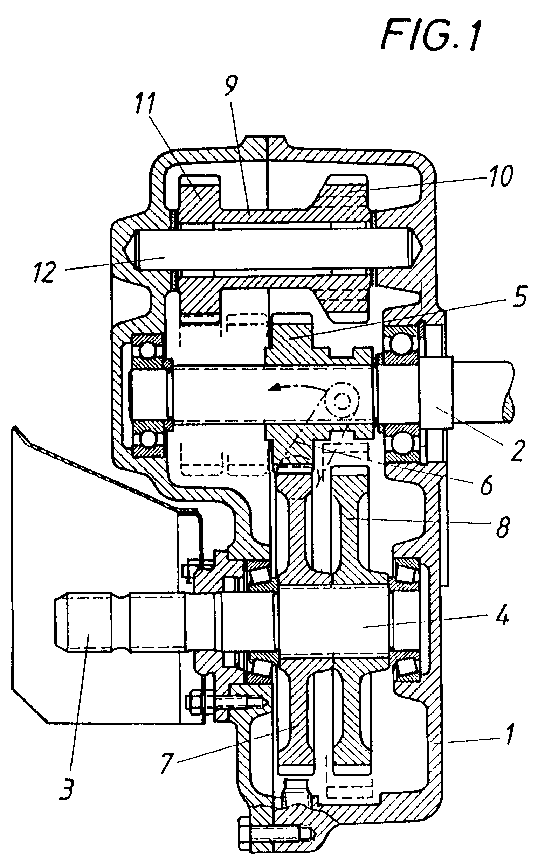

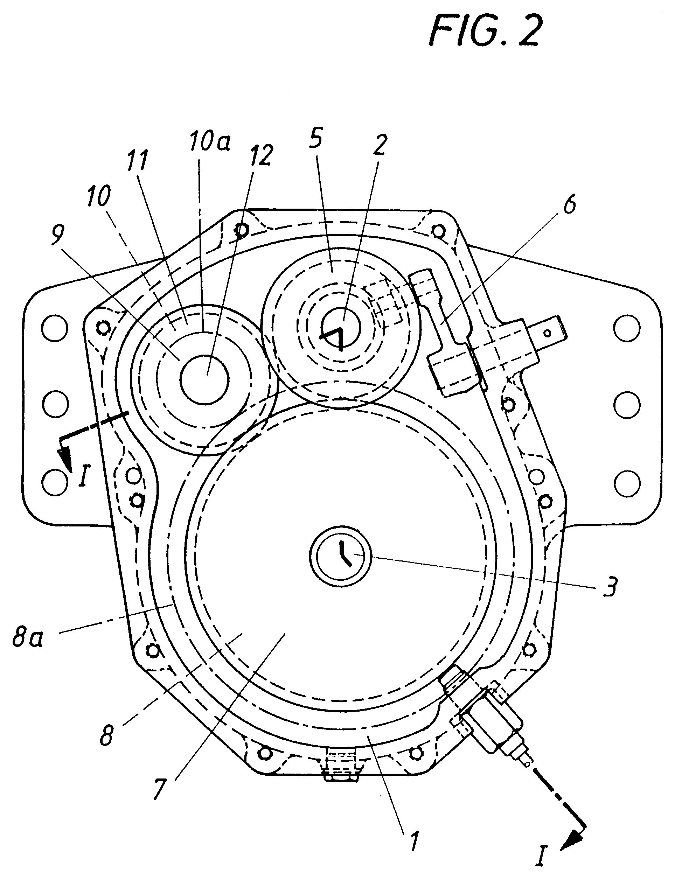

Fig. 1 ein erfindungsgemäßes Zapfwellengetriebe im Axialschnitt nach der Linie I-I der Fig. 2,

Fig. 2 eine Stirnansicht dieses Getriebes ohne Deckel,

Fig.3 eine Ausführungsvariante des erfindungsgemäßen Zapfwellengetriebes im Axialschnitt entsprechend Fig. 1, die

Fig.4 bis 5 vier Ausführungsschemata des Getriebes nach Fig.1 und 2 und

Fig.6 ein Ausführungsschema des Getriebes gemäß Fig.3.

Um einen nicht weiter dargestellten Ackerschlepper mit einer wahlweise nach beiden Drehrichtungen und mit verschiedenen Drehzahlen antreibbaren Frontzapfwelle ausrüsten zu können, ist ein Frontzapfwellengetriebe 1 vorgesehen, das eine an den Schlepperantriebsmotor ankuppelbare Eingangswelle 2 und eine den Zapfwellenstummel 3 bildende Ausgangswelle 4 aufweist. Auf der Eingangswelle 2 sitzt drehfest ein als Antriebsrad dienendes Schieberad 5, das über eine Schalteinrichtung 6 in eine Freistellung und zwei Schaltstellungen verschiebbar ist. Die Ausgangswelle 4 nimmt zwei unmittelbar nebeneinander angeordnete Abtriebsräder 7, 8 auf, die unterschiedlich dimensioniert sein können und einerseits direkt, anderseits über ein Doppelrad 9 mit dem Schieberad 5 antriebsverbindbar sind. Das Doppelrad 9 lagert mit seinen beiden Einzelrädern 10, 11 lose auf einer Zwischenwelle 12, wobei das eine Rad 10 des Doppelrades 9 ständig mit dem vom Zapfwellenstummel 3 entfernteren Abtriebsrad 8 kämmt und das andere Rad 11 des das Schieberad 5 übergreifenden Doppelrades 9 in einer der Schaltstellungen mit dem Schieberad 5 in Eingriff kommt. In der anderen Schaltstellung greift das Schieberad 5 direkt in das dem Zapfwellenstummel 3 benachbarte Abtriebsrad 7 ein, wobei sich zwischen diesen beiden Schaltstellungen die Freistellung des Schieberades 5 befindet.

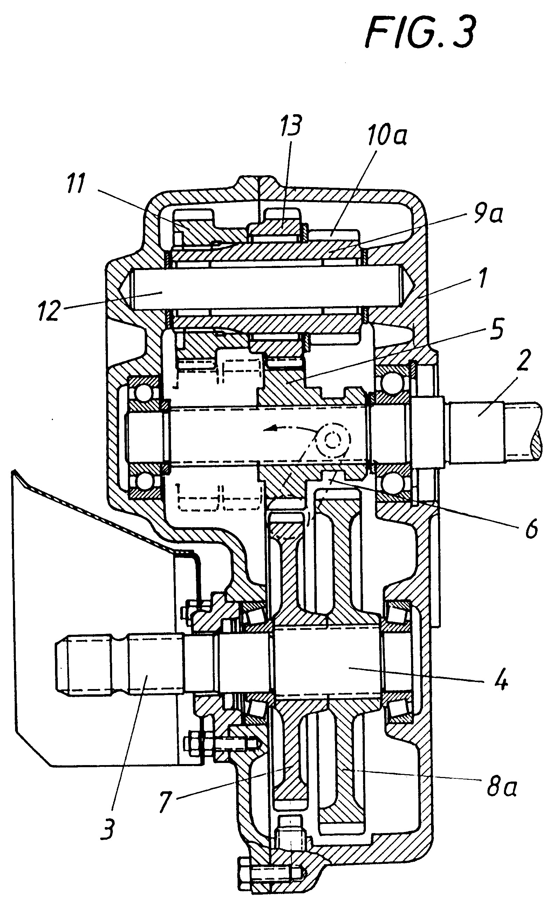

Wie in Fig.3 angedeutet, kann auf dem Doppelrad 9 ein weiteres Losrad 13 gelagert sein, das seinerseits ständig mit dem Abtriebsrad 7 kämmt und statt dieses Abtriebsrades 7 in der einen Schaltstellung dem Schieberad 5 zugeordnet ist, sodaß das Schieberad 5 mit keinem der Abtriebsräder 7,8 mehr direkt kämmt, sondern in der einen Schaltstellung mit dem einen Rad 11 des Doppelrades 9 und in der anderen Schaltstellung mit dem Losrad 13 kämmt, wodurch sich bei gleichbleibender Drehrichtung der Ausgangswelle 4 zwei unterschiedliche Drehzahlstufen schalten lassen.

Das Frontzapfwellengetriebe 1 kann in unterschiedlichen Ausführungsvarianten angeboten werden, wobei im wesentlichen bis auf die entsprechend unterschiedlich zu dimensionierenden Zahnräder die Bauteile gleichbleiben.

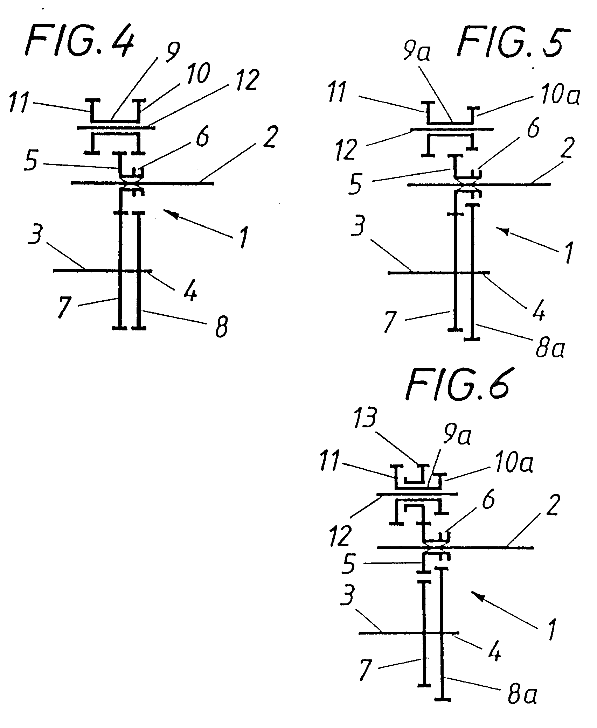

Beim Zapfwellengetriebe gemäß Fig.4 läßt sich der Zapfwellenstummel 3 mit einer Drehzahl, vorzugsweise 1000 U/min, rechtsdrehend oder linksdrehend antreiben, wozu das Zapfwellengetriebe 1 neben dem Schieberad 5 zwei Antriebsräder 7, 8 gleicher Größe und ein entsprechendes Doppelrad 9 umfaßt. Neben der Freistellung des Schieberades 5 wird durch Umschalten des Schieberades 5 von der einen in die andere Schaltstellung bei gleichbleibender Drehzahl die Drehrichtung des Zapfwellenstummels 3 geändert.

Beim Getriebe nach Fig. 5 gibt es dem Schieberad 5 zugeordnete unterschiedlich dimensionierte Abtriebsräder 7,8a und ein darauf abgestimmtes Doppelrad 9a, sodaß in der einen Schaltstellung der Zapfwellenstummel 3 rechtsdrehend mit höherer Drehzahl, beispielsweise 1000 U/min, und in der anderen Schaltstellung linksdrehend mit geringerer Drehzahl, beispielsweise 540 U/min, angetrieben wird.

Fig.6 zeigt ein Zapfwellengetriebe 1, das einen mit zwei verschiedenen Drehzahlen, vorzugsweise 1000 U/min und 540 U/min, antreibbaren linksdrehenden Zapfwellenstummel 3 besitzt, wozu es außer dem Schieberad 5, den beiden Abtriebsrädern 7, 8a und dem Doppelrad 9a noch das auf dem Doppelrad 9a gelagerte Losrad 13 gibt. Die beiden unterschiedlich großen Abtriebsräder 7, 8a kämmen einerseits mit dem einen Rad 10a des Doppelrades 9a, anderseits mit dem Losrad 13 und das Schieberad 5 läßt sich in seinen beiden Schaltstellungen einmal mit dem Losrad 13, das andere Mal mit dem freien Rad 11 des Doppelrades 9 in Eingriff bringen, sodaß es jeweils zu einer Linksdrehung des Zapfwellenstummels mit einer durch die Schaltstellungen bestimmten Drehzahl kommt. Auch hier bringt selbstverständlich, wie in allen Varianten auch, die Freistellung des Schieberades 5 eine vollständige mechanische Trennung des Zapfwellenstummels 3 vom Antriebsmotor mit sich.

Das erfindungsgemäße Zapfwellengetriebe zeichnet sich durch seinen breiten Anwendungsbereich aus und läßt sich in wirtschaftlichster Weise den verschiedensten Anforderungen anpassen. Dabei kommt es zu einem verhältnismäßig geringen Herstellungsaufwand und vor allem auch zu einer recht kurzen Baulänge.

**Patentansprüche**

1. Zapfwellengetriebe (1), insbesondere für die Frontzapfwelle von Ackerschleppern od.dgl., mit einer an den Antriebsmotor ankuppelbaren Eingangswelle (2), einer den Zapfwellenstummel (3) bildenden Ausgangswelle (4) und drehfest auf den Ein- und Ausgangswellen (2,4) angeordneten An- und Abtriebsrädern (5, 7, 8,),

**dadurch gekennzeichnet**,

daß die Eingangswelle (2) ein Schieberad (5) als Antriebsrad aufnimmt,

daß die Ausgangswelle (4) zweinebeneinander sitzende Abtriebsräder (7, 8, 8a) trägt,

daß ein auf einer Zwischenwelle (12) lose gelagertes Doppelrad (9, 9a) mit einem der Abtriebsräder (8, 8a) kämmt und

daß das Schieberad (5) über eine Schalteinrichtung (6) aus einer Freistellung in zwei Schaltstellungen verschiebbar ist, in deren einer es in das freie Abtriebsrad (7) und in deren anderer es in das freie Rad (11) des Doppelrades (9, 9a) eingreift.

2. Zapfwellengetriebe nach Anspruch 1, **dadurch gekennzeichnet**, daß das Doppelrad (9, 9a) mit dem vom Zapfwellenstummel (3) entfernteren Abtriebsrad (8, 8a) kämmt und das dem Stummel (3) benachbarte andere Abtriebsrad (7) übergreift, wobei vorzugsweise das Schieberad (5) in seiner Freistellung zwischen dem ihm zugeordneten Rad (11) des Doppelrades (9, 9a) und dem ihm zugeordneten Abtriebsrad (7) liegt.

3. Zapfwellengetriebe nach Anspruch 1 oder 2, **dadurch gekennzeichnet**, daß auf dem Doppelrad (9) ein weiteres Losrad (13) gelagert ist, das mit dem dem Schieberad (5) zugeordneten Abtriebsrad (7) kämmt und in das statt in das Antriebsrad (7) auch das Schieberad (5) in seiner einen Schaltstellung eingreift.

## Claims

1. A transmission (1) for a power take-off shaft, particularly for the front power take-off shaft of agricultural tractors or the like, which transmission comprises an input shaft (2), which is adapted to be coupled to the drive motor, an output shaft (4), which constitutes the power take-off stub shaft (3), and input and output gears (5, 7, 8), which are non-rotatably mounted on the input and output shafts (2, 4), characterized in that

the input shaft (2) carries a sliding gear (5) as an input gear,

the output shaft (4) carries two juxtaposed output gears (7, 8, 8a),

a double gear (9, 9a) is freely rotatably mounted on an intermediate shaft (12) and in mesh with one of the output gears (8, 8a) and

the sliding gear (5) is slidable by shifting means (6) from a non-meshing position to two meshing positions and in one of said meshing positions meshes with the free output gear (7) and in the other meshing position meshes with the free gear (11) of the double gear (9, 9a).

2. A transmission for a power take-off shaft according to claim 1, characterized in that the double gear (9, 9a) meshes with that output shaft (8, 8a) which is more remote from the power take-off stub shaft (3), the double gear (9, 9a) extends over the other output gear (7), which is adjacent to the stub shaft (3), and the sliding gear (5), when it is in its non-meshing position is preferably disposed between the associated gear (11) of the double gear (9, 9a) and the associated output gear (7).

3. A transmission for a power take-off shaft according to claim 1 or 2, characterized in that an additional idler (13) gear is rotatably mounted on the double gear (9) and is in mesh with that output gear (7) which is associated with the sliding gear (5), and the sliding gear (5) in one of its meshing positions is in mesh with that idler gear (13) rather than with the output gear (7).

## Revendications

1. Jeu d'engrenages pour prise de force (1), en particulier pour la prise de force avant de tracteurs agricoles ou engins analogues, avec un arbre d'entrée (2)à pouvant être accouplé au moteur d'entraînement du tracteur, un arbre de sortie (4) constituant le bout d'arbre (3) de la prise de force, et des pignons d'entrée et roues dentées de sortie (5, 7, 8) calés en rotation sur les arbres d'entrée et de sortie (2, 4) caractérisé en ce que

l'arbre d'entrée (2) porte comme pignon menant un pignon coulissant (5),

l'arbre de sortie (4) porte deux roues dentées de sortie (7, 8, 8a) montées l'une à côté de l'autre,

un pignon double (9, 9a) monté fou sur un arbre intermédiaire (12) engrène avec l'une des roues dentées de sortie (8, 8a), et

le pignon coulissant (5) peut être déplacé à l'aide d'un mécanisme de changement de vitesse (6), d'une position de liberté à deux positions d'engrènement à l'une desquelles il engrène avec la roue dentée libre (7) de sortie et à l'autre desquelles il engrène avec le pignon libre (11) du pignon double (9, 9a).

2. Jeu d'engrenages pour prise de force selon la revendication 1, caractérisé en ce que le pignon double (9, 9a) engrène avec la roue dentée (8, 8a) la plus éloignée du bout d'arbre (3) de la prise de force et chevauche l'autre roue d'entée (7) voisine du bout d'arbre (3), le pignon coulissant (5) se trouvant à sa position de liberté situé de préférence entre le pignon (11) qui lui correspond du pignon double (9, 9a) et la roue dentée de sortie (7) qui lui correspond.

3. Jeu d'engrenages pour prise de force selon la revendication 1 ou 2, caractérisé en ce que, sur le pignon double (9), est monté un pignon fou (13) supplémentaire avec lequel engrène la roue dentée de sortie (7) associée au pignon coulissant (5) et à la place de la roue dentée de sortie (7) engrène aussi le pignon coulissant (5) à l'une de ses positions d'engrènement.

FIG.1

# FIG. 2

# FIG.3

FIG.4

FIG.5

FIG.6